# DEMANDE DE BREVET EUROPEEN

(11) **EP 1 216 887 A1**
(43) Date de publication de la demande: **26.06.2002**
(21) Numéro de dépôt: 01128891.7
(22) Date de dépôt: 05.12.2001
(51) Int. Cl.: B60R 16/02

(54) **Dispositif pour envelopper et fixer un faisceau de câbles éléctriques**

(30) Priorité: 21.12.2000 FR 0016796
(71) Demandeur: VALEO CLIMATISATION, 78321 La Verrière (FR)
(72) Inventeur: Droulez, Eric, 92150 Suresnes (FR)
(74) Mandataire: Gérard, Michel

(57) **Abrégé**

On insère le faisceau dans une coque allongée (2) en forme de canal, par une ouverture d'entrée longitudinale (4) dont la largeur au repos est inférieure au diamètre du faisceau et peut être augmentée par déformation élastique de la coque, celle-ci étant elle-même insérée dans un logement allongé (7) prévu dans le support, par une ouverture d'entrée longitudinale (8) dont la largeur est inférieure au diamètre extérieur de la coque au repos.

Application à l'alimentation électrique d'appareils et/ou à la transmission de signaux électriques dans un véhicule automobile.

## Description

L'invention concerne un procédé et un dispositif pour envelopper un faisceau de câbles électriques et le fixer le long d'un support allongé, notamment pour l'alimentation électrique d'appareils et/ou la transmission de signaux électriques dans un véhicule automobile.

L'expression "faisceau de câbles électriques" désigne un ensemble de câbles ou de fils électriques accolés ou regroupés les uns aux autres de manière à s'étendre côte à côte selon un trajet commun. Généralement, chaque câble ou fil est accolé aux autres sur une partie seulement de sa longueur, et s'en écarte sur au moins une autre partie de sa longueur pour atteindre des éléments à raccorder électriquement. La présente invention concerne plus particulièrement l'enveloppement et la fixation d'un ensemble de telles parties accolées de câbles ou fils.

Dans les applications automobiles notamment, il est nécessaire d'envelopper les faisceaux de câbles, pour éviter que le frottement entre ceux-ci et des éléments voisins, dû aux vibrations et aux mouvements du véhicule, provoque un endommagement des câbles ou fils d'une part, et l'émission de bruit d'autre part. Cet enveloppement peut être réalisé au moyen de rubans adhésifs enroulés en hélice autour des fils de manière à les recouvrir au moins partiellement, et complètement par endroits. Une autre fonction des rubans adhésifs est de rendre les fils des faisceaux solidaires pour leur montage et leur tenue dans le véhicule. Ces rubans adhésifs peuvent coûter cher, et l'opération d'enrubannage être coûteuse en main-d'oeuvre. En outre, l'insonorisation obtenue n'est pas toujours entièrement satisfaisante.

Quant à la fixation du faisceau sur son support, qui est par exemple la traverse supportant le cockpit dans le cas d'un faisceau servant à raccorder des équipements du tableau de faisceau servant à raccorder des équipements du tableau de bord d'un véhicule, elle est réalisée par des agrafes métalliques ou plastiques réparties sur la longueur du faisceau. Ce mode de fixation est lui aussi relativement coûteux en main-d'oeuvre et n'assure pas une immobilisation parfaite du faisceau sur toute sa longueur.

Le but de l'invention est de remédier à ces inconvénients.

L'invention vise notamment un procédé du genre défini en introduction, et prévoit qu'on insère le faisceau dans une coque allongée en forme de canal déformable élastiquement, par une ouverture d'entrée longitudinale, la coque étant elle-même fixée au support dans une position où la largeur de ladite ouverture d'entrée est inférieure au diamètre du faisceau.

Lorsque le diamètre du faisceau varie sur la longueur de la coque, la largeur de l'ouverture d'entrée est inférieure au diamètre maximal du faisceau.

Des caractéristiques optionnelles de l'invention, complémentaires ou alternatives, sont énoncées ci-après:
- On fixe la coque au support avant d'y insérer le faisceau. Ainsi la coque peut servir de support d'assemblage et de transport des fils ou câbles constituant le faisceau, dans les diverses configurations de celui-ci correspondant aux options du véhicule.
- On insère le faisceau dans la coque avant de fixer celle-ci au support.
- On fixe la coque au support en insérant celle-ci dans un logement allongé prévu dans le support, par une ouverture d'entrée longitudinale dont la largeur est inférieure au diamètre extérieur de la coque lorsque celle-ci entoure le faisceau.
- Ledit logement est prévu dans une partie extrudée du support.
- La coque présente deux rebords s'écartant l'un de l'autre vers l'extérieur à partir des bords de son ouverture d'entrée respectivement, propres à faciliter la dilatation élastique de l'ouverture lors de l'introduction du faisceau et/ou à protéger des parties de fils s'écartant de celui-ci à leur sortie du support.
- La coque est extrudée.
- La coque est en matériau cellulaire.
- La coque est en polyéthylène.

L'invention a également pour objet un dispositif pour la mise en oeuvre du procédé tel que défini ci-dessus, comprenant un faisceau de câbles électriques, une coque allongée en forme de canal déformable élastiquement, propre à recevoir ledit faisceau par une ouverture d'entrée longitudinale, et des moyens de fixation de la coque le long d'un support allongé, dans une position où la largeur de ladite ouverture d'entrée est inférieure au diamètre du faisceau.

Avantageusement, les moyens de fixation de la coque comprennent un logement allongé prévu dans le support, propre à recevoir la coque par une ouverture d'entrée longitudinale dont la largeur est inférieure au diamètre extérieur de la coque lorsque celle-ci entoure le faisceau.

Les caractéristiques et avantages de l'invention seront exposés plus en détail dans la description ci-après, en se référant aux dessins annexés.

Les figures 1 à 4 sont des vues schématiques en coupe transversale montrant des étapes successives du procédé selon l'invention.

La figure 5 est une vue analogue aux précédentes, montrant le dispositif selon l'invention à l'issue du procédé.

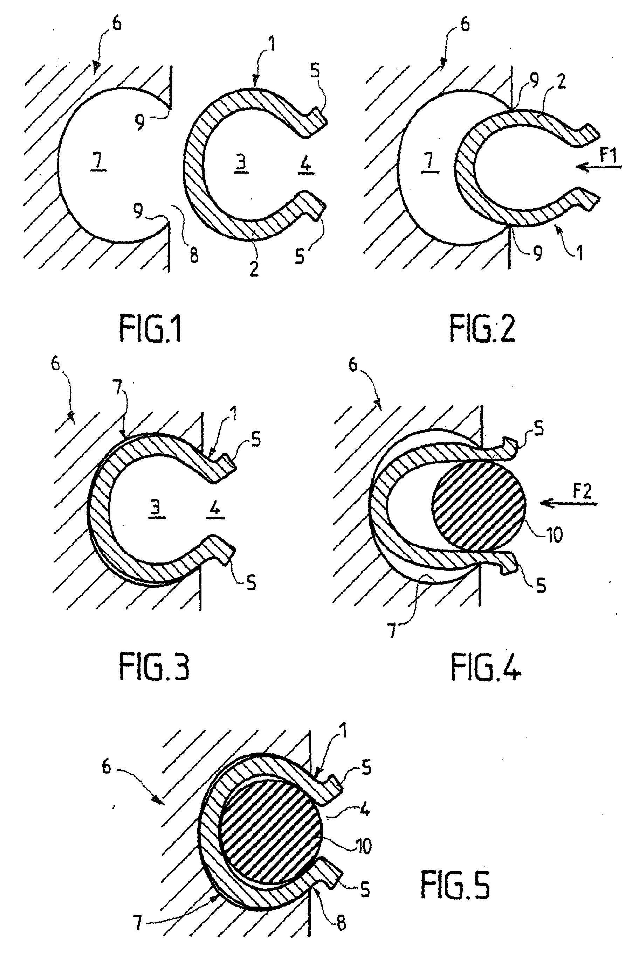

La figure 1 montre à l'état de repos, c'est-à-dire en l'absence déformation élastique, une coque 1 destinée à recevoir un faisceau de câbles électriques (non représenté) dans le procédé selon l'invention. La coque 1 est une pièce extrudée en mousse de polyéthylène pouvant subir une déformation élastique aussi bien par flexion de sa paroi que par compression dans la direction de l'épaisseur de celle-ci, grâce à sa porosité. Elle présente une section transversale en forme de Ω, dont la partie principale 2, définissant le corps de la coque, est incurvée sur plus d'un demi-tour de manière à délimiter une cavité 3 communiquant avec l'extérieur par une ouverture résiduelle ou fente 4. La partie 2 se raccorde à deux rebords 5 s'écartant l'un de l'autre vers l'extérieur à partir des bords de l'ouverture 4.

La figure 1 montre également en partie une traverse 6 destinée à s'étendre transversalement à l'avant de l'habitacle d'un véhicule automobile pour supporter la planche de bord et/ou tout ou partie des équipements du cockpit du véhicule. La traverse 6 présente un logement longitudinal 7 représenté sous la forme d'une rainure qui est réalisée avantageusement dans une pièce éventuellement extrudée constituant la traverse ou appartenant à celle-ci. La paroi de la rainure 7 est incurvée sensiblement en correspondance de la surface externe du corps 2 de la coque 1, et la rainure 7 communique avec l'extérieur par une ouverture longitudinale 8 dont la largeur est inférieure à la largeur maximale de la rainure.

Dans l'étape du procédé représentée sur la figure 1, on présente la coque 1 en regard de l'ouverture 8, l'ouverture 4 étant placée à l'opposé de cette dernière.

Dans l'étape représentée sur la figure 2, on pousse la coque 1 selon la flèche F1 de manière à la faire pénétrer dans la rainure 7 à travers l'ouverture 8. Dans l'exemple illustré, l'encombrement au repos du corps 2 dans la direction de la largeur de l'ouverture 8 est supérieur à cette largeur, de sorte que les bords 9 de l'ouverture 8 s'appuient sur le corps 2, réduisant la largeur de celui-ci par déformation élastique. À la fin de l'introduction, comme montré sur la figure 3, la coque 1 se détend et reprend sa forme initiale dans la mesure où les dimensions respectives de la coque et de la rainure 7 le permettent, une déformation résiduelle pouvant subsister sans nuire à la fonction de la coque.

Dans l'étape représentée sur la figure 4, on présente le faisceau de câbles 10 en regard de l'ouverture 4 et on le pousse selon la flèche F2 pour le faire pénétrer à l'intérieur de la coque. La poussée du faisceau écarte les rebords 5 par déformation élastique, et l'épaisseur de paroi de la coque est localement réduite si nécessaire, grâce à la porosité de la coque, lors du passage du faisceau dans son diamètre maximal à travers l'ouverture 8.

Comme évoqué plus haut, une autre manière de procéder consiste à monter d'abord le faisceau dans la coque, puis l'ensemble ainsi obtenu dans le support.

La position finale est montrée sur la figure 5. Le faisceau 10 est logé dans la cavité 3 et vient en contact avec la coque 1 selon au moins trois génératrices, la coque étant elle-même en contact avec la paroi de la rainure 7 également selon au moins trois génératrices. Il en résulte un positionnement sans jeu du faisceau par rapport à la traverse 6 dans le plan de la figure, c'est-à-dire dans un plan perpendiculaire à la direction longitudinale du faisceau. De préférence, ce maintien est encore renforcé par un serrage radial du faisceau dans la coque et de la coque dans la rainure, grâce à la déformation élastique de la coque. Il est également possible de laisser un jeu entre la coque et le faisceau, la paroi en mousse de la coque évitant les bruits du faisceau.

Le trajet du faisceau de câbles n'est pas nécessairement rectiligne. Il peut également être curviligne et/ou en ligne brisée, notamment lorsque le support lui-même n'est pas rectiligne. Le logement 7 est alors conformé selon le trajet souhaité, et la coque s'adapte à celui-ci par déformation élastique.

Bien qu'on ait décrit l'utilisation d'une coque en mousse, c'est-à-dire à paroi poreuse, il est également possible d'utiliser une coque à paroi pleine. Dans ce cas, la diminution d'épaisseur mentionnée à propos de la figure 4, si elle est nécessaire, c'est-à-dire si l'épaisseur au repos de la paroi est supérieure à la moitié de la différence entre la largeur de l'ouverture 8 et le diamètre maximal du faisceau 10, est obtenue par déplacement de matière parallèlement à la direction d'introduction du faisceau. Par ailleurs, dans le cas où la largeur de la coque n'est pas supérieure, au repos, à la largeur de l'ouverture 8, cette largeur est augmentée par déformation élastique, lorsque le faisceau 10 est introduit, pour empêcher la coque et le faisceau de sortir du logement 7.

## Revendications

1. Procédé pour fixer un faisceau (10) de câbles électriques à un support (6), notamment pour l'alimentation électrique d'appareils et/ou la transmission de signaux électriques dans un véhicule automobile, dans lequel on insère le faisceau dans une coque (2) en forme de canal déformable élastiquement, par une ouverture d'entrée longitudinale (4), la coque étant elle-même fixée au support dans une position où la largeur de ladite ouverture d'entrée est inférieure au diamètre du faisceau, **caractérisé en ce que** la coque est une pièce allongée extrudée enveloppant le faisceau, ladite ouverture d'entrée s'étendant dans la direction longitudinale de la coque, et le faiscau s'étendant le long du support qui est lui-même allongé.

2. Procédé selon la revendication 1, dans lequel on fixe la coque au support avant d'y insérer le faisceau.

3. Procédé selon la revendication 1, dans lequel on insère le faisceau dans la coque avant de fixer celle-ci au support.

4. Procédé selon l'une des revendications précédentes, dans lequel on fixe la coque au support en insérant celle-ci dans un logement allongé (7) prévu dans le support, par une ouverture d'entrée longitudinale (8) dont la largeur est inférieure au diamètre extérieur de la coque lorsque celle-ci entoure le faisceau (10).

5. Procédé selon la revendication 4, dans lequel ledit logement est prévu dans une partie extrudée du support.

6. Procédé selon l'une des revendications précédentes, dans lequel la coque présente deux rebords (5) s'écartant l'un de l'autre vers l'extérieur à partir des bords de son ouverture d'entrée (4) respectivement, propres à faciliter la dilatation élastique de l'ouverture lors de l'introduction du faisceau et/ou à protéger des parties de fils s'écartant de celui-ci à leur sortie du support.

7. Procédé selon l'une des revendications précédentes, dans lequel la coque est en matériau cellulaire.

8. Procédé selon l'une des revendications précédentes, dans lequel la coque est en polyéthylène.

9. Dispositif pour la mise en oeuvre du procédé selon l'une des revendications précédentes, comprenant un faisceau de câbles électriques (10), une coque allongée (2) en forme de canal déformable élastiquement, propre à recevoir ledit faisceau par une ouverture d'entrée longitudinale (4), et des moyens de fixation de la coque le long d'un support allongé (6), dans une position où la largeur de ladite ouverture d'entrée est inférieure au diamètre du faisceau.

10. Dispositif selon la revendication 9, dans lequel les moyens de fixation de la coque comprennent un logement allongé (7) prévu dans le support, propre à recevoir la coque par une ouverture d'entrée longitudinale (8) dont la largeur est inférieure au diamètre extérieur de la coque lorsque celle-ci entoure le faisceau (10).
